# FASCICULE DE BREVET EUROPEEN

(11) **EP 2 333 755 B1**
(45) Date de publication et mention de la délivrance du brevet: **24.08.2016**
(21) Numéro de dépôt: 10194559.0
(22) Date de dépôt: 10.12.2010
(51) Int. Cl.: G09F 23/06, B62B 3/14, G09F 3/16, G09F 21/04

(54) **Support de visuel pour chariot de point de vente**
Werbeträger für Wagen von Verkaufspunkten
Visual display support for point-of-sale cart

(30) Priorité: 14.12.2009 FR 0958953
(43) Date de publication de la demande: 15.06.2011
(73) Titulaire: Optimark, 13540 Puyricard (FR)
(72) Inventeur: Boussemart, Bertrand, 78150 Le Chesnay (FR)

(56) Documents cités:
- EP-A1- 0 834 436
- WO-A1-98/47130
- FR-A1- 2 587 525
- FR-A1- 2 643 178
- FR-A1- 2 795 033
- US-A1- 2005 028 637
- US-A1- 2005 218 612

## Description

### DOMAINE TECHNIQUE GENERAL

L'invention concerne le domaine des supports de visuel pour chariots de points de vente, pouvant être fixés sur les poignées ou barres de ces chariots.

### ETAT DE L'ART

Les hypermarchés, supermarchés, grands magasins, centres commerciaux ou autres centres de grande distribution, plus généralement points de vente, sont des endroits privilégiés pour l'affichage, et en particulier pour l'affichage publicitaire. En effet, les consommateurs se trouvent au plus près des produits et sont donc particulièrement sensibles aux messages affichés dans ces lieux qui concernent les produits.

De nombreux dispositifs ont donc été développés de manière à afficher des informations aux consommateurs, qu'ils s'agissent d'informations publicitaires, d'informations pratiques sur des promotions, d'informations sur les produits, ou d'informations sur le point de vente en lui-même.
On peut citer notamment le document WO 98/47130 qui présente un support de visuel pour chariot de supermarché, destiné à des messages ou à des informations. Ce dispositif est destiné à être attaché à la poignée ou barre du chariot via des moyens de verrouillage spécifiques, associés à des moyens complémentaires de la poignée ou barre. Le message ou l'information est alors attaché sur un panneau support orienté face à l'utilisateur qui pousse le chariot.
Le document US 2005/028637 présente un support de visuel selon le préambule de la revendication 1.
Ce dispositif présente toutefois plusieurs formes d'inconvénients. En effet, les moyens de verrouillage présentés nécessitent une adaptation du chariot et en particulier de la poignée ou barre qui doit être réalisée de manière spécifique afin d'être compatible avec les moyens de fixation du dispositif. De plus, la structure du support de visuel en résultant est relativement complexe, ce qui entraîne un coût important pour de tels dispositifs qui peuvent être amenés à être remplacés fréquemment en raison de leurs lieux d'utilisation et de leur forte exposition au public, voire à la météo.

Par ailleurs, les solutions existantes ne permettent pas à la fois un changement facile du visuel ou du message tout en assurant un bon maintien du support de visuel sur le chariot de supermarché.

### PRESENTATION DE L'INVENTION

L'invention se propose de répondre à ces inconvénients et propose donc un support de visuel pour chariot de point de vente, ledit support étant adapté pour être fixé sur une poignée ou barre (30) de chariot de point de vente, ledit support de visuel comprenant :
- un manchon cylindrique ouvert longitudinalement et adapté pour se refermer, par déformation élastique, sur une poignée ou barre (30) de chariot,
- deux plaques prolongeant le manchon et s'étendant vers l'extérieur, de part et d'autre de l'ouverture longitudinale dudit manchon, lesdites plaques comportant chacune des moyens de verrouillage complémentaires disposés sur des faces en regard des plaques et adaptés pour coopérer lorsque les deux plaques sont refermées l'une sur l'autre afin de permettre le positionnement d'un visuel entre les plaques et de réaliser la fixation du support de visuel sur la poignée ou barre.

Le support de visuel selon l'invention peut également comprendre une ou plusieurs des caractéristiques suivantes :
- le manchon a une section dont les dimensions sont inférieures ou égales aux dimensions de la section de la poignée ou barre du chariot de point de vente, le manchon se fixant par serrage sur ladite poignée ou barre lorsque les deux plaques sont rabattues l'une sur l'autre pour refermer ledit manchon,
- les moyens de verrouillage sont séparables sous l'effet d'un effort de traction manuel exercé entre les deux plaques (22, 24),
- les moyens de verrouillage sont des clips thermoformés,
- chacune des plaques comporte cinq clips thermoformés,
- les plaques ont une forme rectangulaire.

L'invention concerne également un ensemble pour chariot de point de vente, comprenant :
- un support de visuel tel que défini précédemment,
- un visuel associé audit support de visuel, ledit visuel comprenant une zone de fixation adaptée pour coopérer avec les moyens de verrouillage du support de visuel, et une zone d'affichage,
ladite zone de fixation dudit visuel étant adaptée pour être insérée entre les deux plaques dudit support de visuel, et comprenant des moyens de positionnement adaptés pour coopérer avec les moyens de verrouillage dudit support de visuel.

Selon un mode de réalisation particulier, le visuel a une zone d'affichage et une zone de fixation de forme rectangulaire disposée dans la continuité de la zone d'affichage.

En outre, l'invention présente un procédé de fixation d'un tel ensemble sur une poignée ou barre de chariot de point de vente, ledit procédé comprenant les étapes suivantes :
- positionner le support autour de la poignée ou barre,
- disposer la zone de fixation du visuel entre les plaques du support,
- rabattre les plaques du support l'une sur l'autre pour enserrer la zone de fixation du visuel entre les plaques et verrouiller le support de visuel sur la poignée ou barre.

### PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :
Les Figures 1 à 4 représentent un support de visuel conforment à un mode de réalisation possible de l'invention dans les différentes étapes de sa fixation à une poignée ou barre de chariot de point de vente.
La figure 5 présente une vue en coupe d'un support de visuel conforme à un autre mode de réalisation possible.
Les figures 6, et 7 illustrent un autre mode de réalisation possible de l'invention, d'une part avant montage sur une poignée ou barre (figure 6) et d'autre part après montage (figure 7).

### DESCRIPTION DETAILLEE

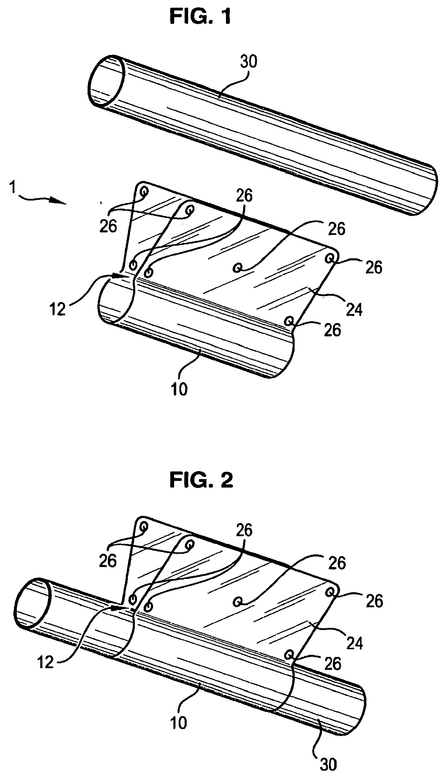

La figure 1 présente un support de visuel (1) disposé en regard de la poignée ou barre (30) d'un chariot de point de vente.

Le support de visuel (1) comprend :
- un manchon (10), ledit manchon (10) comprenant une ouverture longitudinale (12) s'étendant sur toute sa longueur,
- deux plaques (22) et (24), sensiblement rectangulaires, les deux plaques (22) et (24) prolongeant le manchon (10) en s'étendant vers l'extérieur, de part et d'autre de l'ouverture longitudinale (12).

Dans le mode de réalisation représenté, chacune des plaques (22) et (24) comporte cinq moyens de verrouillage (26), disposés sur des faces en regard des plaques (22) et (24), adaptés pour coopérer afin de réaliser un verrouillage respectif des plaques (22) et (24).

Dans la description des figures suivantes, les éléments identiques à ceux présentés dans la description de la Figure 1 conserveront les mêmes références.

La Figure 2 présente le support de visuel (1), ici mis en position sur la poignée ou barre (30) du chariot de point de vente. Cette mise en position peut par exemple être réalisée en venant insérer le support de visuel (1) sur la poignée ou barre (30) du chariot de point de vente, en écartant les deux plaques (22) et (24) du support de visuel (1) de manière à en augmenter la largeur afin de permettre le passage de la poignée ou barre (30) du chariot de point de vente par la fente longitudinale (12) du support de visuel (1).

Lorsque les deux plaques (22) et (24) sont rabattues sur elles-mêmes, le manchon (10) se referme alors, par déformation élastique sur la poignée ou barre (30), de manière à l'enserrer totalement sans même tourner autour (sans colle, vis indévissable ou rivet plastique). Le serrage qu'il réalise permet par conséquent la fixation du support de visuel (1) sur la poignée ou barre (30).

Le matériau dans lequel est réalisé le support de visuel (1) - par exemple un APET - possède des propriétés mécaniques suffisantes pour permettre sa mise en position, puis son serrage, par déformation élastique sur la poignée ou barre (30). Il doit être apte à se déformer suffisamment pour que la fente longitudinale (12) permette le passage de la poignée ou barre (30) du chariot de point de vente. Il est en outre totalement transparent pour permettre de lire d'une part toutes informations sur la barre de chariot, comme le nom du point de vente ou de l'enseigne, et d'autre part toutes informations de la marque elle-même présente sur le visuel (40).

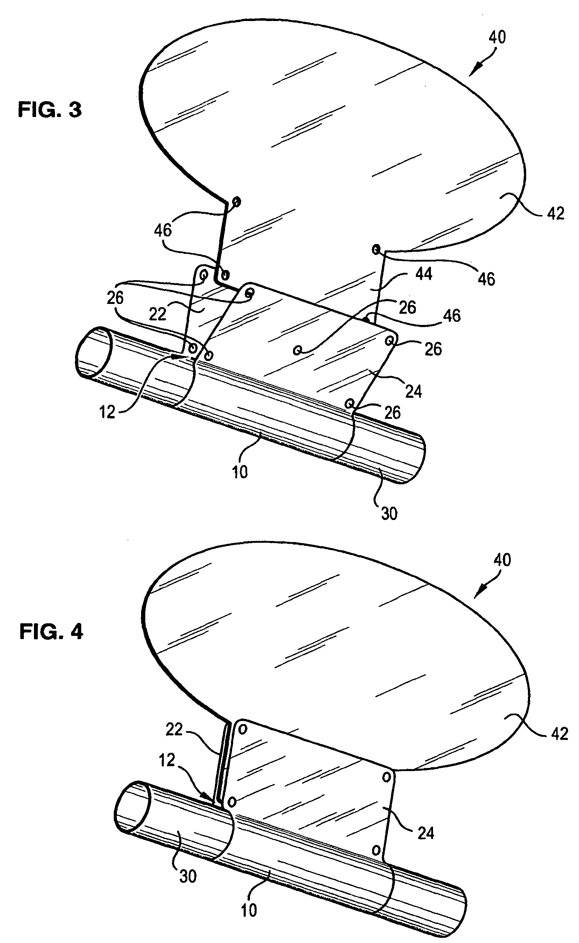

La Figure 3 présente le support de visuel (1) mis en position sur la poignée ou barre (30) du chariot de point de vente, tel que présenté sur la Figure 2, auquel on vient ajouter un visuel (40). Le visuel (40) est ici composé d'un support rigide comprenant une zone de fixation (44) de forme sensiblement identique à celle des plaques (22) et (24) ainsi qu'une zone d'affichage (42) destinée à recevoir le message d'information ou le message publicitaire.

Dans le mode de réalisation représenté, la zone d'affichage (42) a une forme sensiblement ovale, tandis que la zone de fixation (44) a une forme rectangulaire.

Les formes de ces deux zones sont susceptibles de varier, en particulier la forme de la zone d'affichage (42) qui peut être adaptée selon l'information qu'elle contient.
La zone de fixation (44) comporte des moyens de positionnement (46) disposés de manière à être alignés avec les moyens de verrouillage (26) des plaques (22) et (24) du support de visuel (1), lorsque la zone de fixation (44) est insérée entre les deux plaques (22) et (24).

Le visuel (40) est par exemple réalisé en polypropylène, et a une épaisseur du même ordre de grandeur que l'épaisseur des plaques (22) et (24).

La figure 4 présente la dernière étape de fixation du support de visuel (1) sur un chariot de point de vente. Les plaques (22) et (24) sont alors serrées l'une contre l'autre, puis assemblées grâce aux moyens de verrouillage (26), permettant un maintien en position du visuel (40) dont la zone de fixation (44) est insérée entre les plaques (22) et (24).

La zone d'affichage (42) est alors sensiblement radiale à la poignée ou barre (30) du chariot, ce qui lui confère une bonne visibilité vis-à-vis de l'utilisateur du chariot de point de vente tout au long de ses courses.

Le maintien et l'orientation du support de visuel (1) sur la poignée ou barre (30) du chariot de point de vente sont réalisés grâce au dimensionnement du manchon (10) du support de visuel (1) par rapport à la poignée ou barre (30).

Le manchon (10) du support de visuel (1) a par exemple des dimensions inférieures ou égales aux dimensions externes de la poignée ou barre (30) du chariot de point de vente. Ainsi, lorsque l'on réalise l'assemblage des deux plaques (22) et (24) via les moyens de verrouillage (26), le manchon (10) exerce une force de serrage sur la poignée ou barre (30) du chariot de point de vente, cette force de serrage étant suffisante pour maintenir l'orientation du support de visuel (1) en empêchant la rotation du support de visuel (1) autour de la poignée ou barre (30).

Selon un mode de réalisation particulier, le support de visuel (1) est réalisé dans un matériau transparent, permettant ainsi de ne pas masquer la poignée ou barre (30) du chariot de point de vente qui est susceptible de comporter des inscriptions (par exemple le nom ou l'enseigne du point de vente d'où provient le chariot), ainsi que la zone de fixation (44) du visuel (40) qui est également susceptible de comporter des informations.

Bien que le mode de réalisation présenté comporte cinq moyens de verrouillage (26) sur chacune des plaques (22) et (24), ainsi que cinq moyens de positionnement (46) sur la zone de fixation (44) du visuel (40), d'autres modes de réalisation comprenant un nombre réduit de moyens de verrouillage sont envisageables, ce nombre devant toutefois être suffisant pour assurer le maintien du support de visuel (1) en position.

La forme et le dimensionnement des plaques (22) et (24) peut également varier, dans la limite où elle permet d'y disposer les moyens de verrouillage (26). Faire ainsi varier la forme des plaques (22) et (24) peut être intéressant notamment pour des opérations publicitaires visant des produits spécifiques. La forme de la zone de fixation (44) peut également être adaptée en conséquence. On peut par exemple prévoir pour les plaques (22), (24) une longueur de l'ordre de 10 cm, pour une hauteur à partir du manchon (10) de l'ordre de 3, 5 cm.

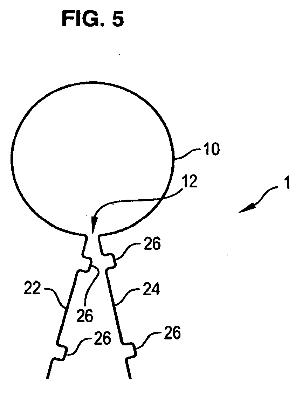

La figure 5 présente une vue schématique en coupe du support de visuel (1) dans lequel les moyens de verrouillage (26) sont des clips thermoformés. Ces clips thermoformés sont par exemple des excroissances creuses de forme globalement cylindrique sur les plaques (22) et (24). Lorsque les plaques (22) et (24) sont serrées l'une contre l'autre, les excroissances de l'une des plaques vont venir se loger dans les cavités définies par les excroissances creuses de l'autre plaque, ce qui entraine le maintien en position des deux plaques (22) et (24) l'une par rapport à l'autre.

Le visuel (40) comporte quant à lui, des moyens de positionnement (46) étant ici des orifices débouchants de forme sensiblement cylindrique ayant par exemple des dimensions supérieures ou égales aux dimensions des clips thermoformés, afin de permettre le passage des excroissances au travers de ces orifices.

Le manchon (10) du support de visuel (1) peut être adapté selon la forme de la poignée ou barre (30) du chariot de point de vente. En effet, bien que les poignées ou barres de chariots de point de vente soient circulaires dans une forte majorité de cas, on peut imaginer d'autres formes, notamment des poignée ou barres à section ovale. Dans ce cas, la forme du manchon (10) est adaptée afin qu'elle corresponde à la poignée ou barre du chariot de point de vente sur lequel le support de visuel (1) est destiné à être utilisé.

On remarquera en outre que le fait d'utiliser des poignées ou barres de forme non circulaires va naturellement verrouiller l'orientation du support de visuel (1), en en empêchant la rotation autour de la poignée ou barre.

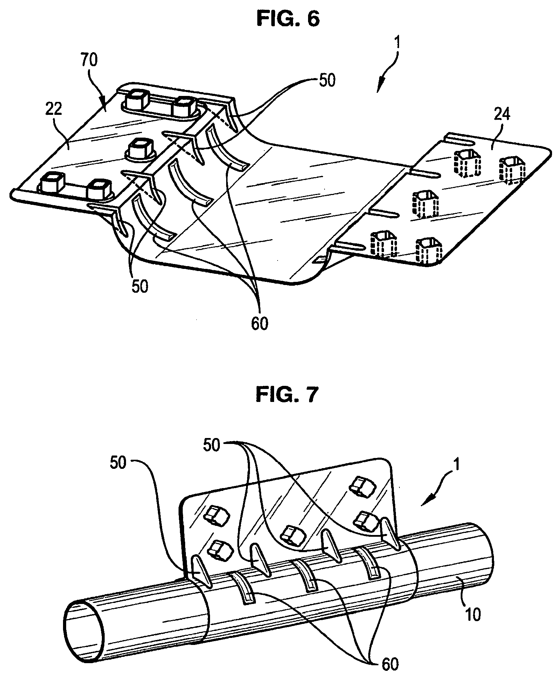

Dans le mode de réalisation qui est illustré sur les figures 6 et 7, le support de visuel (1) comporte plusieurs nervures de rigidification (50) qui s'étendent en triangle entre d'un côté la partie formant manchon (10) et de l'autre les plaques (22) et (24) destinées à être rabattues l'une sur l'autre.

Ces nervures de rigidification (50) sont thermoformées avec le reste de la pièce qui constitue le support de visuel (1). Elles s'étendent en saillie du côté extérieur dudit support (1).

Il est également prévu sur la partie (10) formant manchon des renfoncements (60) de faible épaisseur qui participent au serrage de la poignée ou barre (30) de chariot lors de la mise en place du support sur celle-ci.

Par ailleurs, l'une et/ou l'autre des deux plaques (22), (24) peut présenter une légère surépaisseur pour délimiter le logement (70) d'encastrement dans lequel est reçu le pied du visuel (40).

Les supports de visuel (1) tels que décrits précédemment ont donc une structure simple, aisée à mettre en place sur une poignée ou barre (30) de chariot de point de vente et permettant à la fois un affichage robuste d'informations.

Ces supports de visuel (1) sont de plus faciles à mettre en place sur tout type de chariot de point de vente sans nécessiter un aménagement spécifique de la poignée ou barre.

## Revendications

1. Support de visuel (1) pour chariot de point de vente, ledit support étant adapté pour être fixé sur une poignée ou barre (30) de chariot de point de vente, ledit support de visuel (1) comprenant :
un manchon (10) ouvert longitudinalement et adapté pour se refermer, par déformation élastique, sur une poignée ou barre (30) de chariot,
ledit support étant **caractérisé en ce qu'**il comprend en outre deux plaques (22, 24) prolongeant le manchon (10) et s'étendant vers l'extérieur, de part et d'autre de l'ouverture longitudinale (12) dudit manchon (10), lesdites plaques (22, 24) comportant chacune des moyens de verrouillage (26) complémentaires disposés sur des faces en regard des plaques (22, 24) et adaptés pour coopérer lorsque les deux plaques sont refermées l'une sur l'autre afin de permettre le positionnement d'un visuel (40) entre les plaques (22, 24) et de réaliser la fixation du support de visuel (1) sur la poignée ou barre (30).

2. Support de visuel (1) selon la revendication précédente, **caractérisé en ce que** ledit manchon (10) a une section dont les dimensions sont inférieures ou égales aux dimensions de la section de la poignée ou barre du chariot de point de vente, le manchon (10) se fixant par serrage sur ladite poignée ou barre (30) lorsque les deux plaques (22, 24) sont rabattues l'une sur l'autre pour refermer ledit manchon (10).

3. Support de visuel (1) selon l'une des revendications précédentes, **caractérisé en ce que** les moyens de verrouillage sont séparables sous l'effet d'un effort de traction manuel exercé entre les deux plaques (22, 24).

4. Support visuel selon la revendication précédente, **caractérisé en ce que** les moyens de verrouillage sont des clips thermoformés.

5. Support de visuel (1) selon la revendication précédente, **caractérisé en ce que** chacune des plaques comporte cinq clips thermoformés.

6. Support de visuel (1) selon l'une des revendications précédentes, **caractérisé en ce que** lesdites plaques ont une forme rectangulaire.

7. Support de visuel (1) selon l'une des revendications précédentes, **caractérisé en ce qu'**il est en un matériau transparent.

8. Ensemble pour chariot de point de vente, ledit ensemble étant **caractérisé en ce qu'**il comprend :
- un support de visuel (1) selon l'une des revendications précédentes,
- un visuel (40) associé audit support de visuel (1), ledit visuel (40) comprenant une zone de fixation adaptée pour coopérer avec les moyens de verrouillage (26) du support de visuel (1), et une zone d'affichage (42),
ladite zone de fixation (44) dudit visuel (1) étant adaptée pour être insérée entre les deux plaques (22, 24) dudit support de visuel (1), et comprenant des moyens de positionnement adaptés pour coopérer avec les moyens de verrouillage (26) dudit support de visuel (1).

9. Ensemble selon la revendication précédente, **caractérisé en ce que** ledit visuel (1) a une zone d'affichage et une zone de fixation (44) de forme rectangulaire disposée dans la continuité de la zone d'affichage.

10. Procédé de fixation d'un ensemble selon l'une des revendications 6 ou 7 sur la poignée ou barre d'un chariot de point de vente, ledit procédé étant **caractérisé en ce qu'**il comprend les étapes suivantes :
- positionner le support de visuel (1) autour de la poignée ou barre (30),
- disposer la zone de fixation (44) du visuel (1) entre les plaques du support (22,24),
- rabattre les plaques du support (22,24) l'une sur l'autre pour enserrer la zone de fixation (44) du visuel (1) entre les plaques (22,24) et verrouiller le support de visuel (1) sur la poignée ou barre (30).

## Patentansprüche

1. Werbungsträger (1) für Einkaufswagen; der genannte Werbungsträger ist geeignet, an einem Handlauf oder dem Griff von Einkaufswagen befestigt zu werden (30); der genannte Werbungsträger (1) umfasst:
Eine Muffe (10), in Längsrichtung verlaufend, und geeignet sich mittels elastischer Verformung, wieder um den Handlauf bzw. den Griff des (30) Einkaufswagens zu schließen,
Der genannte Werbungsträger ist **dadurch gekennzeichnet, dass** er zusätzlich zwei Platten(22, 24) umfasst, die über dem Handlauf (10) liegen und die sich nach außen auf beiden Seiten der Längsöffnung (12) der genannten Halterung (10) erstrecken; die genannten Platten (22, 24), jede ausgestattet mit komplementären (besser: ergänzenden) Verriegelungsmitteln (26), die auf den gegenüberliegenden Seiten der Platten angeordnet (22, 24) und verbunden sind um zusammenzuwirken, wenn die beiden Platten wieder geschlossen werden, die eine über die andere, um, die Positionierung einer Anzeige (40) zwischen den Platten (22, 24) zu ermöglichen und die Befestigung von Werbungsträgern an der Griffstange (30) zurealisieren (oder: umzusetzen / zu verwirklichen).

2. Werbungsträger (1) nach dem vorhergehenden Anforderungsprofil,
**dadurch gekennzeichnet, dass** die genannte Halterung (10) einen Abschnitt hat, dessen Abmessungen kleiner oder gleich der Abmessungen des Abschnitts des genanntes Handlaufs oder der Stange der Einkaufswagen sind; die Halterung (10) wird befestigt durch Einspannen auf dem Handlauf oder der Stange (30), wenn die beiden Platten (22, 24) eingeklappt / herunter geklappt sind zum Schließen der genannten Halterung (10).

3. Werbungsträger (1) nach dem vorhergehenden Anforderungsprofil,
**dadurch gekennzeichnet, dass** die Verriegelungsmittel trennbar sind,
unter der Einwirkung einer manuellen Zugbeanspruchung zwischen beiden Platten (22, 24).

4. Werbungsträger (1) nach dem vorhergehenden Anforderungsprofil, **dadurch gekennzeichnet, dass** die Verriegelungsmittel thermogeformte Clips sind.

5. Werbungsträger (1) nach dem vorhergehenden Anforderungsprofil ,
**dadurch gekennzeichnet, dass** jede Platte fünf thermogeformte Clips umfasst.

6. Werbungsträger (1) nach dem vorhergehenden Anspruch,
**dadurch gekennzeichnet, dass** die genannten Platten
eine rechteckige Form haben.

7. Werbungträger (1) nach dem vorhergehenden Anforderungsprofil,
**dadurch gekennzeichnet, dass** es ein transparentes Material ist.

8. Komplex für Einkaufswagen, der genannte Komplex ist **dadurch gekennzeichnet, dass** er umfasst:
- Ein Werbungsträger (1) nach dem vorhergehenden Anforderungsprofil,
- Ein Werbungsträger (40), der dem genannten Werbungsträger (1) zugeordnet ist; dieser genannte Werbungsträger (40) umfasst eine "Befestigungszone", die angepasst ist, um mit den erriegelungsmitteln (26) des Werbungsträgers (1) zusammen zu passen und eine Plakatzone (42); die genannte Befestigungszone (44) des genannten Werbungsträger s (1) ist angepasst, um zwischen den beiden Platten (22, 24) des genannten Werbungsträgers (1) eingefügt zu werden, und umfasst Positionierungsmittel, die angepasst sind , um mit den Verriegelungsmitteln (26) des genannten Werbungsträgers (1) zusammenzuwirken.

9. Komplex nach dem vorhergehenden Anforderungsprofil, **dadurch gekennzeichnet, dass** der genannte Werbungsträger (1) eine Plakatzone (42) und eine Befestigungszone (44) in rechteckiger Form hat, anknüpfend an die Linie der Plakatzone (42).

10. (besser: Technisches Verfahren) zur Befestigung nach einem der Anforderungsprofile 6 oder 7 am Handlauf oder dem Griff eines Einkaufswagens;
das genannte Verfahren ist **dadurch gekennzeichnet, dass** es die folgenden Schritte umfasst:
- Positionieren des Werbungsträgers (1) um den Handlauf oder Griff (30),
- Anordnen / Aufstellen / Arrangieren der Befestigungszone (44) des Werbungsträgers (1) zwischen den Platten (22,24),
- Übereinanderklappen der Platten (22,24), um die Befestigungszone (44) des Werbungsträgers (1) zwischen den Platten (22,24) festzuklemmen und Verriegeln des Werbungsträgers (1) am Handlauf oder Griff (30).

## Claims

1. Picture support (1) for outlet's trolleys, the support being adapted to be fixed on an handle or an outlet trolley's bar and this picture support (1) contains:
A sleeve (10) longitudinally opened and adapted to close by plastic deformation on a handle or a trolley bar (30)
This support has got the following characteristics:
Two plates (22,24) extending the sleeve (10) and Extending towards the outside of part and other one of the longitudinal opening (12) of the sleeve (10), the described plates (22,24)having each one complementary locking means (26) arranged on faces compared to the plates (22,24) and adapted to cooperate when the two plates are closed one on each other in order to permit positioning of a picture (40) between the plates (22,24) and to realize the picture support fixing (1) on the handle or the bar (30)

2. Picture support (1) following the previous revendication /demand, **characterized by** the fact that the described sleeve (10) has got a section for which dimensions are less than or equal to the dimensions of the handle section or the bar of the outlet's trolley, the sleeve (10) being fixed by screwing the handle or bar (30) when the two plates (22, 24) are folded down one on each other in order to close the sleeve (10).

3. Picture support (1) following the previous revendications /demands, **characterized by** the fact that the locking devices can be separated under the action of a manual pulling force between the two plates (22,24)

4. Picture support according previous revendication/demand **characterized by** the fact that the locking devices are thermoformed clips.

5. Picture support (1) according former revendication/demande, **characterized by** the fact that each plate has got five thermoformed clips.

6. Picture support (1) following on of the previous revendications / demands **characterized by** the fact that it is a transparency material.

7. Picture support (1) according one of the former revendication, caracterised by the fact that it is built in a transparent material

8. Package for a trolley's outlet, the package being **characterized by**:
A picture support (1) according one of the previous revendication/demand A visual (40) associated to the picture support being adapted to cooperate with the locking means (26) of the picture support (1) and a display area (42)
The said fixing zone (44) of the visual (1) being adapted to be inserted between the two plates (22,24) of the said picture support, and including positioning means adapted to cooperate with the locking means (26) of the said picture support (1)

9. Package according previous revendication/demand by the fact that the said visual (1) has a display area and a rectangular fixing area (44) placed within the continuity of the display area.

10. Method for fixing a package according one of the revendications/demand 6 or 7 on the handle or bar of an outlet's trolley, the said process being **characterized by** the fact that it contains the following steps:
Position the picture support (1) around the handle or bar (30)
Arrange the fixing zone (44) of the visual (1) between the support plates (22,24) Fold back the support plates (22,24) one on each other in order to clamp the fixing area (44) of the visual (1) between the plates (22,24) and lock the picture support (1) on the handle or the bar (30)
